# DEMANDE DE BREVET EUROPEEN

(11) **EP 3 199 773 A1**
(43) Date de publication de la demande: **02.08.2017**
(21) Numéro de dépôt: 16204590.0
(22) Date de dépôt: 16.12.2016
(51) Int. Cl.: F01N 3/20

(54) **BOUCHON DE REMPLISSAGE ET RÉSERVOIR DE STOCKAGE ÉQUIPÉ D'UN TEL BOUCHON**

(30) Priorité: 26.01.2016 FR 1650611
(71) Demandeur: Peugeot Citroën Automobiles SA, 78140 Vélizy-Villacoublay (FR)
(72) Inventeur: MASSE, DAVID, 78500 SARTROUVILLE (FR)

(57) **Abrégé**

L'invention concerne un bouchon de remplissage (1) destiné à un réservoir de fluide contenant une solution d'un composé chimique. Ce bouchon (1) s'étend selon un axe central (X'X) et comporte un capuchon (4) couplé à un corps de base (3) selon une liaison autorisant un degré de liberté de mouvement relatif du capuchon (4) par rapport au corps de base (3) tout en ménageant un espace de ventilation (E) entre eux. Des orifices de ventilation (6) traversent le corps de base (3) afin de ventiler le réservoir (2) et des ergots (7) venant du capuchon (4) s'étendent parallèlement à l'axe central (X'X) du bouchon (1). Ces ergots (7) sont aptes à se déplacer dans ces orifices de ventilation (6) lorsque le capuchon (4) est entraîné en mouvement par rapport au corps de base (3).

## Description

L'invention se rapporte à un bouchon, notamment de type ventilé et /ou autonettoyant ainsi qu'à un réservoir de stockage de fluide équipé d'un tel bouchon. Un tel réservoir est en général couplé à une ligne d'alimentation en fluide, en particulier une ligne d'injection d'un fluide de réduction catalytique sélective dit SCR (acronyme de « selective catalytic reduction » en terminologie anglaise) d'un véhicule automobile. Dans ce cas-là, le fluide en question est par exemple sous forme liquide, comme de l'urée en phase aqueuse. Il peut aussi s'agir d'autres fluides, par exemple de carburant (essence).

L'invention s'applique donc particulièrement au domaine de l'automobile, mais peut également être utilisée au stockage de fluide dans le domaine du bâtiment, de la chimie ou des machines industrielles.

Lorsque le fluide contient un composé chimique capable de cristalliser aisément en séchant au contact de l'air, en particulier les composés chimiques à forte capillarité, les cristaux formés viennent se concentrer dans le conduit de sortie et sur le bouchon de réservoir. En général, les bouchons de réservoir destinés à ce type de fluide contenant un tel composé - par exemple une solution d'urée dans le cas des fluides SCR - sont ventilés pour éviter une éjection de fluide tout en laissant passer de l'air et des vapeurs provenant de la solution d'urée.

Une telle approche est décrite par exemple dans le document de brevet EP 2 492 128. Dans ce document, le bouchon de réservoir de la ligne d'injection d'un fluide SCR est ventilé à travers une membrane semi-perméable constituée d'un matériau dit « respirant », en particulier un matériau à base de GORE-TEX^{®}. De plus, un chemin d'échappement des vapeurs de la solution d'urée est créé pour assurer l'échappement d'une quantité importante de vapeur pendant une durée déterminée.

L'utilisation de membrane présente une efficacité réduite et nécessite un remplacement régulier. En outre, le chemin d'échappement se bouche rapidement par le dépôt de cristaux d'urée.

Il est par ailleurs connu du document de brevet US 20120097680, un bouchon de réservoir de carburant pour moteur à combustion interne. Ce bouchon comprend un corps principal venant fermer l'orifice du réservoir, ce corps intégrant un support filtrant, et une longe de sécurisation du bouchon en place par liaison avec un ancrage sur une pièce de moteur à l'une de ses extrémités. A l'autre extrémité, la longe comporte une attache qui vient se loger dans une ouverture formée dans le corps du bouchon. Un écart d'évent entre l'attache et l'ouverture du corps est prévu afin de permettre aux vapeurs du réservoir de s'échapper vers le support filtrant ou vers l'extérieur. L'écart entre l'attache et l'ouverture autorise également des mouvements de l'attache par rapport au corps du bouchon, ce qui permet de diminuer passivement l'encrassement de cet écart par des dépôts de carburant, des salissures ou autres substances qui peuvent bloquer l'évent.

Cette solution propose la mise en place d'un écart dans lequel les mouvements d'une attache permettraient de limiter son encrassement. Or la source de tels mouvements n'étant pas clairement identifiée, ces mouvements ne peuvent être générés, en tout état de cause, que très aléatoirement sans pouvoir assurer une réelle élimination de l'encrassement.

Une autre solution est proposée par le document de brevet US 20070108212. Cette solution consiste à mettre à la pression atmosphérique le réservoir juste avant de dévisser le bouchon pour un remplissage de carburant. Dans ce but, le capuchon du bouchon est d'abord ou quasi-simultanément enfoncé avec le dévissage, contre la force de rappel de ressorts, dans des encoches formées dans une partie de vissage / dévissage du bouchon. Ce mouvement axial entraîne la mise en pression atmosphérique du réservoir à travers des canaux de communication entre un tube creux prolongeant le capuchon et l'alésage central du bouchon. Ainsi, les vapeurs et les polluants du carburant migrent dans un milieu absorbant / nettoyant agencé dans le capuchon, puis dans l'environnement via des évents.

Cette dernière proposition est dédiée au carburant qui ne contient pas de matière cristallisable et procède à une mise à pression atmosphérique et non à une aération permanente. Appliquée à un fluide contenant une solution d'urée, elle n'empêcherait pas la formation de cristaux et ne permettrait pas leur élimination.

L'invention a pour objectif principal d'éliminer la cristallisation d'un composant de fluide contenu dans un réservoir (ou le fait que celui-ci génère un encrassement pour des raisons autres qu'une cristallisation stricto sensu) et plus particulièrement dans les ouvertures d'aération formées au niveau du bouchon. Pour ce faire, l'invention prévoit un agencement d'avancées dans ces ouvertures d'aération aptes à être entraînées en mouvement.

A cet effet, la présente invention a pour objet un bouchon de remplissage, notamment ventilé et/ou autonettoyant, destiné à un réservoir de fluide, ledit fluide pouvant notamment contenir une solution d'un composé chimique capable de cristalliser, ou, à tout le moins, de générer des encrassements. Le bouchon s'étend selon un axe central et comporte un capuchon couplé à un corps de base selon une liaison autorisant un degré de liberté de mouvement relatif du capuchon par rapport au corps de base tout en ménageant un espace de ventilation entre eux. Des orifices de ventilation traversent le corps de base afin de ventiler le réservoir et des ergots, venant du capuchon et s'étendant parallèlement à l'axe central du bouchon, sont aptes à se déplacer dans ces orifices de ventilation lorsque le capuchon est entraîné en mouvement par rapport au corps de base.

Dans ces conditions, la mise en mouvement du capuchon, en particulier lorsque le bouchon est retiré lors d'un remplissage de réservoir, élimine tout dépôt de cristaux ou de salissure qui se serait accumulé dans les orifices de ventilation.

Selon des modes de réalisation préférés:
- une plaque de fixation du capuchon présentant au moins une ouverture est couplée au corps de base par une gorge formée dans une paroi cylindrique du corps de base et est rattachée au capuchon via un arbre central qui traverse une ouverture centrale du corps de base, de sorte que la plaque de fixation serve de chicane dans un trajet de ventilation traversant le corps de base pour atteindre les orifices de ventilation afin d'éviter des sorties directes de fluide ;
- les orifices de ventilation sont réalisés sous forme d'ouïes circulaires s'étendant en arcs de cercle et le mouvement relatif du capuchon est un mouvement de rotation apte à entraîner les ergots insérés dans les ouïes d'une extrémité à l'autre de ces ouïes circulaires;
- les orifices de ventilation sont réalisés sous forme d'alésages cylindriques s'étendant parallèlement à l'axe central et le mouvement relatif du capuchon, exercée contre un moyen de rappel, est un mouvement de translation selon l'axe central apte à entraîner les ergots, disposés en regard des alésages, dans un balayage linéaire de ces alésages cylindriques;
- le capuchon présente une coiffe traversée par des évents d'aération;
- le capuchon présente une coiffe qui intègre une structure contenant un milieu de retenue ou absorbant de la matière polluante;
- le corps de base comporte des moyens de liaison étanche et de serrage libérable destinés à être couplés à une tubulure de réservoir de stockage de fluide.

L'invention se rapporte également à un réservoir de stockage de fluide comportant une tubulure de conduit d'alimentation et un bouchon de remplissage du type défini ci-dessus, le bouchon étant couplé à la tubulure par des moyens de liaison libérable. En particulier, le réservoir peut être un réservoir de stockage de fluide de réduction catalytique sélective dit SCR ou de carburant. IL peut s'agir d'un fluide pour le traitement des gaz d'échappement par la réduction sélective catalytique, notamment un fluide de type urée en phase aqueuse.

L'invention se rapporte aussi à un véhicule automobile comportant au moins une installation d'alimentation en fluide, carburant et/ou fluide SCR, équipée d'un réservoir de stockage définie ci-dessus.

Dans le présent texte, les qualificatifs « supérieur » et « inférieur » se rapportent aux positionnements relatifs de parties d'un élément en utilisation standard.

D'autres données, caractéristiques et avantages de la présente invention apparaîtront à la lecture de la description détaillée non limitative qui suit, en référence aux figures annexées qui représentent, respectivement :
- la figure 1, une vue en perspective arrière d'un véhicule équipé d'une installation d'alimentation en fluide SCR;
- la figure 2, une vue en coupe longitudinale selon le plan Il - Il de la figure 3 se rapportant au bouchon de l'installation de la figure 1 ;
- la figure 3, une vue en coupe selon le plan III - III du bouchon de la figure 2, et
- la figure 4, une vue en coupe longitudinale d'une variante de bouchon de l'installation de la figure 1.

Sur les figures, des signes de référence identiques renvoient à un même élément exerçant une même fonction, ainsi qu'aux passages qui le décrivent.

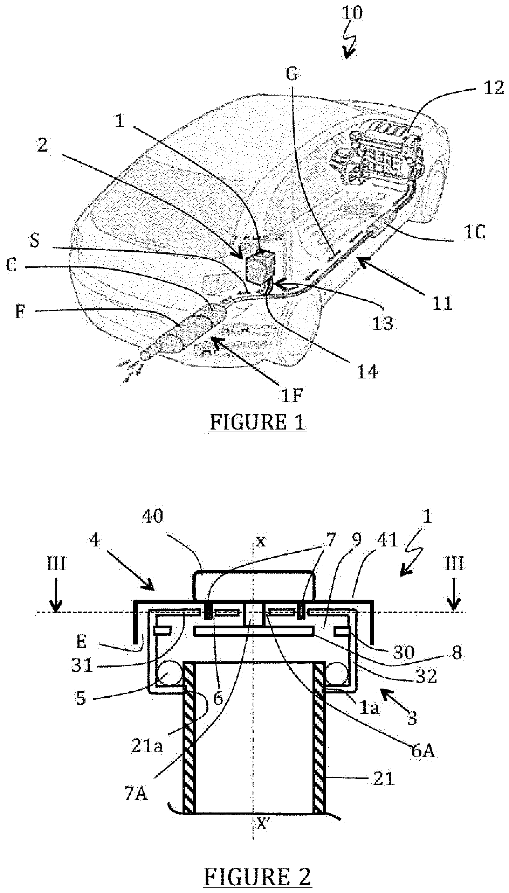

Sur la vue en perspective trois-quarts arrière du véhicule 10 de la figure 1, apparaissent la ligne d'échappement 11 d'évacuation des gaz (flèches « G ») en sortie du moteur diesel 12 jusqu'à leur éjection hors du véhicule, ainsi que la ligne SCR 13 d'installation SCR venant se raccorder sur la ligne d'échappement 11 au point d'injection 14 pour fournir le fluide SCR (flèches « S ») sur la ligne d'échappement 11. Cette installation SCR comprend également un réservoir 2 dans lequel est stocké le fluide SCR. La ligne d'échappement 11 comporte un catalyseur d'oxydation 1C et, après le point le point d'injection 14, un filtre à particule 1 F. Ce filtre à particule 1F se compose d'un catalyseur SCR « C » puis, dans le sens d'évacuation des gaz « G », du filtre proprement dit « F ».

L'installation SCR 13 est destinée à alimenter le catalyseur SCR « C » en une solution à base d'urée qui fournit l'ammoniac nécessaire à la transformation des oxydes d'azote émis par le moteur 12 en azote et eau. Le réservoir 2 est régulièrement réapprovisionné en fluide SCR, avantageusement en même temps que le diesel. Dans ce but, le bouchon de remplissage 1 du réservoir 2 est situé dans la trappe d'accès au réservoir de diesel (non représenté).

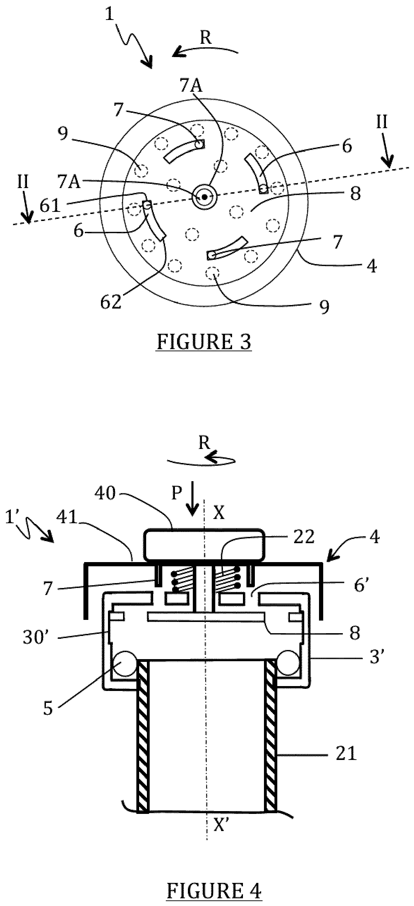

Un exemple de bouchon de remplissage 1 ventilé et autonettoyant selon l'invention est illustré par la vue en coupe longitudinale de la figure 2, selon le plan II - II de la figure 3. Le bouchon 1 est de forme globalement cylindrique de base circulaire et s'étend le long de l'axe central de symétrie X'X. Ce bouchon 1 est couplé sur une tubulure 21 du réservoir 2 (cf. figure 1) par un moyen de serrage libérable 1a, ici un vissage quart de tour, sur une portion taraudée 21a de la tubulure 21. L'étanchéité est assurée par compression d'un joint 5 sur la tubulure 21.

Le bouchon 1 se compose d'un corps de base 3 et d'un capuchon 4. Des orifices de ventilation 6 découpés en secteurs circulaires sur la paroi supérieure 31 du corps de base 3, s'étendant perpendiculairement à l'axe central X'X, forment des ouïes de ventilation pour le réservoir 2 (cf. figure 1). En outre, le capuchon 4 comporte une coiffe 40, adaptée pour réaliser une préhension aisée du bouchon de remplissage 1, et une paroi principale 41 disposée parallèlement à la paroi supérieure 31 du corps de base 3. L'espace entre les parois 31 et 41 forme un espace de ventilation « E ». Des excroissances venant de la paroi supérieure 41 s'étendent parallèlement à l'axe X'X pour être insérées dans les orifices de ventilation circulaires 6 ainsi que dans une ouverture centrale 6A également découpée dans la paroi principale 31. Ces excroissances se composent respectivement d'ergots périphériques 7 et d'un arbre central de rotation 7A. En mode « réservoir fermé », le bouchon 1 est vissé sur la tubulure 21 et les ergots périphériques 7 sont positionnés à une extrémité des orifices 6.

De plus, une plaque de fixation 8 du capuchon 4 est solidarisée par tout moyen connu (soudage, clipsage, bouterollage, rivetage, etc.) à l'extrémité de l'arbre central de rotation 7A, perpendiculairement à l'axe central X'X. Cette plaque de fixation 8 vient se positionner en rotation dans une gorge annulaire 30 formée dans la paroi cylindrique 32 du corps de base 3 et est ajourée par des ouvertures 9. Ces ouvertures 9 réalisent une transition de ventilation en formant des chicanes dans le trajet de ventilation vers les orifices de ventilation circulaires 6.

En référence à la vue en coupe selon le plan III - III de la figure 2, les ouïes formées par les orifices de ventilation 6 apparaissent en figure 3 dans leur extension circulaire. Cette figure illustre également les ergots périphériques 7, positionnés à une extrémité 61 des orifices de ventilation 6 en mode « réservoir fermé », l'arbre central de rotation 7A ainsi que les ouvertures 9 ajourant la plaque de fixation 8. Les ergots 7, les orifices 6 et les ouvertures 9 sont régulièrement répartis autour de l'axe central X'X.

En fonctionnement, en mode « ouverture du réservoir » par exemple lors d'un remplissage du réservoir 2 (cf. figure 1) en fluide SCR, un mouvement de rotation (flèche « R ») est exercé sur le capuchon 4 (cf. figure 2) qui entraîne les ergots périphériques 7 insérés dans les orifices de ventilation 6 jusqu'à l'autre extrémité 62 des orifices 6, de sorte à balayer l'espace de ventilation circulaire défini par ces orifices. Par ce balayage, les orifices de ventilation 6 sont nettoyés des cristaux d'urée déposés lors de la ventilation des vapeurs de fluide SCR et des encrassements.

Lorsque les ergots périphériques 7 atteignent l'extrémité 62 des orifices, la rotation du capuchon 4 (figure 2) entraîne alors le corps de base 3 du bouchon 1. Le corps de base 3 est dévissé dans la portion taraudée 21 a de la tubulure 21, ce qui permet de retirer le bouchon 1 et de libérer la tubulure 21 pour remplir le réservoir 1 (figure 1).

La vue en coupe longitudinale de la figure 4 illustre un exemple de bouchon de remplissage 1' selon un autre mode de réalisation de la présente invention. Dans cet exemple, le capuchon 4, les ergots périphériques 7, l'arbre central 7A, le joint 5 et la plaque de fixation 8 sont identiques aux éléments correspondants de l'exemple précédent. Le corps de base 3' diffère du corps de base 3 par un allongement 30' de la gorge annulaire 30 vers la tubulure 21. La différence essentielle entre les deux exemples de bouchon tient dans les ouïes de ventilation qui se présentent ici sous forme d'orifices cylindriques 6' formant des alésages d'axe parallèle à l'axe central X'X.

En mode « réservoir fermé » illustré à la figure 4, les ergots périphériques 7 sont positionnés en regard des orifices cylindriques 6' et la plaque de fixation 8 est insérée dans la gorge allongée 30' formée dans la paroi du corps de base 3'. La plaque de fixation 8 est alors maintenue en position contre une force de rappel exercée par un ressort hélicoïdal 22 disposé entre la paroi principale 41 du capuchon 4 et la paroi supérieure 31 du corps de base 3'.

Le mode « ouverture du réservoir » se déroule en deux temps dans ce mode de réalisation. Dans un premier temps, une pression (flèche « P ») selon l'axe X'X est exercée sur la coiffe de capuchon 40, ce qui provoque l'insertion des ergots périphériques 7 dans les orifices cylindriques 6' et le déplacement parallèle de la plaque de fixation 8 vers le fond de la gorge allongée 30'. Cette action permet de nettoyer les orifices 6' des dépôts de cristaux d'urée et d'encrassements.

Puis, dans un deuxième temps, une fois la paroi principale de capuchon 41 amenée à proximité de la paroi supérieure 31' du corps de base 3', un mouvement de rotation (flèche « R ») du capuchon 4 entraîne le corps de base 3' via la pression exercée par les ergots 7 dans les orifices cylindriques 6'. Le corps de base 3' se dévisse alors de la tubulure 21 dans la portion taraudée 21 a et le bouchon 1' est séparé de la tubulure 21 dont l'accès est libéré pour remplir le réservoir 2 (figure 1).

L'invention n'est pas limitée aux exemples de réalisation décrits et représentés. Ainsi, l'invention s'applique à tout type de bouchon de réservoir de carburant ou d'installations de stockage de fluide.

D'autres mouvements que rotation ou translation peuvent être utilisés pour réaliser le nettoyage des ouïes de ventilation du bouchon, par exemple un mouvement hélicoïdal de déplacement du capuchon par rapport au corps de base du bouchon.

Le couplage entre le capuchon et le corps de base du bouchon peut être réalisé par d'autres moyens qu'une plaque de fixation, par exemple par un retour externe du capuchon sur la paroi inférieure du corps de base ou par un vissage externe du capuchon sur la paroi cylindrique de ce corps de base.

En variantes des exemples de réalisation décrits, il est possible de prévoir une répartition des ergots périphériques, des orifices de ventilation correspondants et des ouvertures de la plaque de base selon une répartition optimisée en fonction du fluide à stocker ou de l'installation, optimisation qui ne coïncide pas toujours avec une répartition régulière et uniforme.

Des évents d'aération supplémentaires peuvent être également prévus dans la coiffe du bouchon. De plus, la coiffe peut avantageusement intégrer une structure contenant un milieu de retenue ou une matière absorbante de matière polluante véhiculée par les vapeurs ventilées.

Par ailleurs les moyens de rappel peuvent être des lames ou des matériaux élastiques. Les moyens d'étanchéité peuvent être des couches de matériau isolant déposées au niveau des moyens de vissage.

## Revendications

1. Bouchon de remplissage (1, 1') destiné à un réservoir de fluide (2), ledit fluide contenant notamment une solution d'un composé chimique capable de cristalliser / de générer un encrassement, **caractérisé en ce qu'**il s'étend selon un axe central (X'X) et comporte un capuchon (4) couplé à un corps de base (3, 3') selon une liaison autorisant un degré de liberté de mouvement relatif du capuchon (4) par rapport au corps de base (3, 3') tout en ménageant un espace de ventilation (E) entre eux, **en ce que** des orifices de ventilation (6, 6') traversent le corps de base (3, 3') afin de ventiler le réservoir (2), et **en ce que** des ergots (7) venant du capuchon (4) et s'étendant parallèlement à l'axe central (X'X) du bouchon (1, 1'), sont aptes à se déplacer dans ces orifices de ventilation (6, 6') lorsque le capuchon (4) est entraîné en mouvement en rotation par rapport au corps de base (3, 3').

2. Bouchon de remplissage selon la revendication 1, dans lequel une plaque de fixation (8) du capuchon (4) présentant au moins une ouverture (9) est couplée au corps de base (3, 3') par une gorge (30, 30') formée dans une paroi cylindrique (32) du corps de base (3, 3') et est rattachée au capuchon (4) via un arbre central (7A) qui traverse une ouverture centrale (6A) du corps de base (3, 3'), de sorte que la plaque de fixation (8) serve de chicane dans un trajet de ventilation traversant le corps de base (3, 3') pour atteindre les orifices de ventilation (6, 6').

3. Bouchon de remplissage selon l'une des revendications 1 ou 2, dans lequel les orifices de ventilation sont réalisés sous forme d'ouïes circulaires (6) s'étendant en arcs de cercle et le mouvement relatif du capuchon (4) est un mouvement de rotation apte à entraîner les ergots (7) insérés dans les ouïes (6) dans un balayage d'une extrémité (61) à l'autre (62) de ces ouïes circulaires (6).

4. Bouchon de remplissage selon l'une des revendications 1 ou 2, dans lequel les orifices de ventilation sont réalisés sous forme d'alésages cylindriques (6') s'étendant parallèlement à l'axe central (X'X) et le mouvement relatif du capuchon, exercée contre un moyen de rappel (22), est un mouvement de translation selon l'axe central (X'X) apte à entraîner les ergots (7), disposés en regard des alésages, dans un balayage linéaire de ces alésages cylindriques (6').

5. Bouchon de remplissage selon l'une des revendications précédentes, dans lequel le capuchon présente une coiffe (40) traversée par des évents d'aération.

6. Bouchon de remplissage selon l'une des revendications précédentes, dans lequel le capuchon (4) présente une coiffe (40) qui intègre une structure contenant un milieu de retenue ou absorbant de la matière polluante.

7. Bouchon de remplissage selon l'une des revendications précédentes, dans lequel le corps de base (3, 3') comporte des moyens de liaison étanche (5) et de serrage libérable (1a) destinés à être couplés à une tubulure (21) de réservoir de stockage de fluide (2).

8. Réservoir de stockage de fluide (2) comportant une tubulure de conduit d'alimentation (21) et un bouchon de remplissage (1, 1') selon l'une des revendications précédentes, **caractérisé en ce que** le bouchon de remplissage (1, 1') est couplé à la tubulure (21) du réservoir (2) par des moyens de liaison libérable (1a, 21a).

9. Réservoir de stockage de fluide (3) comportant une tubulure de conduit d'alimentation (21) et un bouchon de remplissage (1, 1') selon l'une des revendications précédentes, **caractérisé en ce que** ledit réservoir est un réservoir de fluide pour le traitement des gaz d'échappement par la réduction sélective catalytique, notamment un fluide de type urée en phase aqueuse.

10. Véhicule automobile (10) comportant au moins une installation d'alimentation en fluide (13) équipée d'un réservoir de stockage (2) selon la revendication 8 ou 9.
